Europäisches Patentamt

European Patent Office

Office européen des brevets

(11) Publication number : **0 265 627 B1**

(12) **EUROPEAN PATENT SPECIFICATION**

(45) Date of publication of patent specification :
26.10.94 Bulletin 94/43

(51) Int. Cl.⁵ : **G06F 15/68**

(21) Application number : **87112544.9**

(22) Date of filing : **28.08.87**

(54) **Method for performing morphic transformations.**

(30) Priority : **31.10.86 US 925333**

(43) Date of publication of application :
**04.05.88 Bulletin 88/18**

(45) Publication of the grant of the patent :
**26.10.94 Bulletin 94/43**

(84) Designated Contracting States :
**DE FR GB**

(56) References cited :
**US-A- 4 156 914**

(56) References cited :
**COMPUTER VISION, GRAPHICS AND IMAGE
PROCESSING, vol. 27, no. 1, July 1984,pages
115-123, The Academic Press Inc., New York,
US; F.A. GERRITSEN et al.:"Implementation
of cellular-logic operators using 3*3 convolu-
tion and tablelookup hardware"**
**PATENT ABSTRACTS OF JAPAN, vol. 6, no.
206 (P-149)[1084], 19th October 1982; & JP-
A-57 111 660 (FUJITSU K.K.) 12-07-1982**

(73) Proprietor : **International Business Machines
Corporation
Old Orchard Road
Armonk, N.Y. 10504 (US)**

(72) Inventor : **Lavin, Mark Alan
Lakeside Road RFD No. 4
Mount Kisco, N.Y. 10549 (US)**

(74) Representative : **Jost, Ottokarl, Dipl.-Ing.
IBM Deutschland Informationssysteme GmbH,
Patentwesen und Urheberrecht
D-70548 Stuttgart (DE)**

Jouve, 18, rue Saint-Denis, 75001 PARIS

## Description

### BACKGROUND OF THE INVENTION

#### 1. Field of the Invention

This invention relates generally to image processing, and more particularly to a computer program for use with a general purpose computer that increases the efficiency of the general purpose computer as an image processor by reducing the number of memory accesses required.

#### 2. Description of the Prior Art

A morphic transformation is an operation that maps a binary image into another binary image such that each picture element or pixel in the output image is some Boolean function of the corresponding pixel and other pixels in its neighborhood in the input image.

Even when the neighborhood is restricted to a pixel and the eight pixels adjacent to it horizontally, vertically and diagonally (a "3 by 3" or "Moore" neighborhood), morphic transformations are useful for many image processing and analysis operations. For example, EP-A-0 166 270, assigned to the assignee of the present invention, devised a generic method for detecting defects in images of printed circuit patterns that uses morphic transformations extensively.

Morphic transformations are also useful in other computer graphics operations. When applied to an image, morphic transformations permit manipulation of the image. For example, a morphic transformation of a curved line could remove all but the end points of the line. Another example would be use of a morphic transformation to strip away an outer layer of the image of an irregularly shaped object, or perhaps, add to it.

Due to its widespread usefulness, a number of special purpose hardware devices have been built to perform morphic transformations (see for example, Sternberg, U.S. Patent 4,167,728) and Kimmel, EP-A- 0 210 434.

A further example is shown in an article "Implementation of Cellular-Logic Operators Using 3 ∗ 3 Convolution and Table Lookup Hardware" by F.A. Gerritsen et al., published in Computer Vision, Graphics and Image Processing, vol. 27, no. 1, July 1984, pages 115 to 123, the Academic Press, Inc., New York, US. Cellular-logic operation such as erosion, dilation, contour extraction, skeletonization, local majority voting, and pepper-and-salt noise removal are essential in processing binary images. It is shown that cellular-logic operations, like some homomorphic filters, can be constructed from a 3 ∗ 3 convolution and a nonlinear table lookup, features of many commercially available special image-processing systems.

To implement morphic transformations a nine bit convolution of the Moore Neighborhood may be performed. For purposes of explanation, pixel data having a value of 1 or 0, i.e on or off is considered. These techniques, are, however extendable to pixel data containing additional information, for example, color information. The convolution is performed by multiplying (weighting) each bit in the neighborhood by a predetermined amount, and adding the results together. If the predetermined weights are appropriately selected, for example, powers of 2 from 0 to 8, ($2^0$, $2^1$, . . . $2^8$), the results, for each position will be a nine bit word that contains information relevant to the pixels of the Moore Neighborhood. The resulting nine bit word may then be operated on, for example using a look up table, to transform the image as required. Such convolutions require, for a Moore Neighborhood, a minimum of nine accesses to pixel memory to obtain the necessary data to be operated on.

In a general purpose computer, such memory accesses are usually quite slow, and consequently the morphic transformation is slow.

It is thus an object of the invention to perform morphic transformations efficiently, with a minimal number of memory accesses.

A further object of the invention is to perform morphic transformations efficiently on a general purpose computer rather than on specialized image processing hardware. The above objects are accomplished by the features of the claim.

An advantage of the invention is that it runs faster on a given computer than conventional programs for accomplishing morphic transformations, as a result of its requirement of fewer memory accesses.

Another advantage of the invention is that it efficiently processes bit packed data, in which binary pixels are stored eight per eight bit byte, because input pixels are accessed only once, sequentially.

Yet another advantage of the invention is that the program is efficient when used with image data taken from sequential image memories, because input pixels are accessed strictly sequentially.

These and other objects, features and advantages of the invention will become more apparent upon reference to the attached description of the preferred embodiments and drawings described below.

### BRIEF DESCRIPTION OF THE DRAWINGS

FIG. 1 is an example of pixels in an image;
FIG. 2 shows weightings applied in a convolution of an image;
FIG. 3 is a flow chart of the naive morphic transformation algorithm;
FIGS. 4A and 4B show weightings applied in a two step convolution;
FIGS. 5A and 5B show a flowchart useful in explaining the method according to the present invention; and

FIG. 6 is an example of the pixels in an image useful for explaining the present invention.

## DESCRIPTION OF THE PREFERRED EMBODIMENTS

The method according to the present invention is an algorithm for performing morphic transformations on a general purpose computer more efficiently by reducing the number of memory accesses and other machine operations.

Morphic transformations can often be efficiently implemented (in hardware and software) as a sequence of two operations: 1) convolution and 2) lookup table transformation.

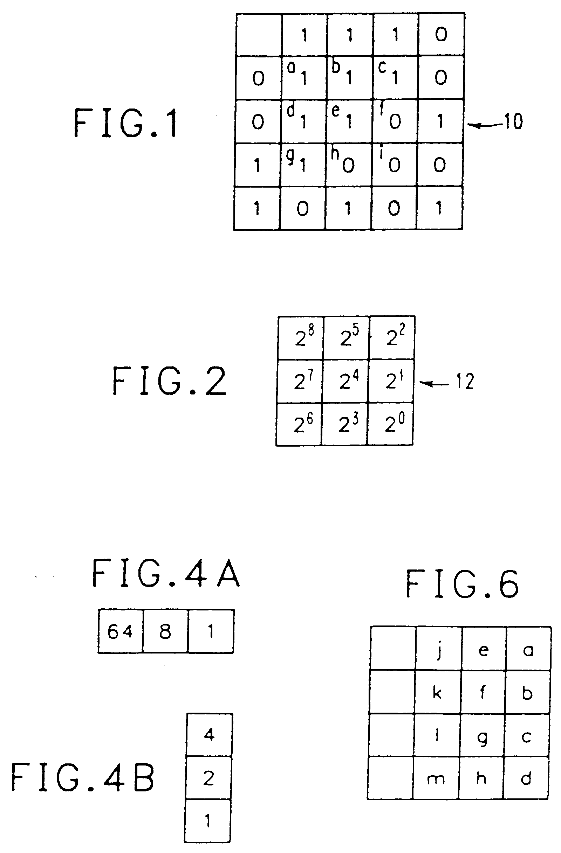

Referring to Fig. 1, for purposes of explanation, image data is shown in a 5 X 5 array in which each pixel has a value of 1 or 0. The nine central pixels (picture elements) are also labelled a-i. It will be clear to those skilled in the art that large (or smaller) arrays can be used. Arrays of 1024 X 1024 pixels are, for example, common in computer graphics environments.

Convolution consists of convolving the input image (consisting of two values: 0 and 1) against a kernel of the form shown in Figure 2. In the step of convolution the kernel shown in FIG. 2 can be considered to be placed over the pixel array of Figure 1 so that the central member of the array, i.e. the $2^4$ member, is placed over the pixel to be operated on. In this instance the morphic transformation for pixel e is considered. As a result of the convolution a value is derived as follows:

$$256a + 128d + 64g + 32b + 16e + 8h + 4c + 2f + i \quad (1)$$

In the example shown a value of:

$$256 + 128 + 64 + 32 + 16 + 4 = 500d = 111110100b = 1F4h \quad (2)$$

is obtained. The value 1F4h is then assigned to the position of pixel e. In like manner, the central value of the kernel can be placed over other pixels in the array to generate 9 bit words for each pixel in the array. In this way each pixel is mapped into a value that contains information about both the pixel and its neighbors.

By proper selection of the values in the kernel of Fig. 2, a maximum number of 511d or 111111111b can be obtained. It will be clear, however, to those of skill in the art that this technique can and has been extended to larger than 3 x 3 neighborhoods, in which case a word of more than nine bits is required.

The result of this convolution is an "image" consisting of nine bit "pixels"; each bit in each pixel of the image has the value of one of the binary values in the 3 by 3 neighborhood of the corresponding pixel in the input image.

The second step of lookup table transformation can then be performed. Lookup table transformation consists of using the nine bit value for each pixel in the input image as an index into a table of 512 one bit values that are defined by the specified neighborhood function. The two steps -- convolution and lookup table transformation -- can be combined into a program that iteratively implements morphic transformations. Such an algorithm is shown in Figure 3, and as will be explained below requires approximately nine memory accesses to the input image for each pixel.

At the first step 20, an input image having m X n rows and columns (nrows and ncols, respectively), is placed into memory for operation. At step 22, the algorithm is initialized to begin at row 1 (irow=1) for the output image. At step 24 a test is made to determine that the row number of the output location is less than that of the input image row-1. If it is not the transformation is ended at step 38. Otherwise the procedure continues and in like manner initializes the output column number (step 26) and tests to make sure that the output image number is less than the input image column number-1 (step 28). In step 30 the pixel value is convolved in accordance with equation 1 above. Since a total of nine input image pixels are needed to compute the value of the convolution, nine memory accesses are needed.

In step 32, the value computed is used as an index to a lookup table, which returns a one bit value of the transformed image which is stored than as a value for the output image (step 34).

After storage the number icols is incremented by one, and the secondary loop starting at step 28 is begun again until an entire row of the input image is completed. After completion of the row, the row number (irows) is incremented at step 30 and the process is continued until all rows are completed and the procedure terminates (step 38).

The present invention takes advantage of the fact that the convolution is separable into two parts. The convolution of the 3 X 3 neighborhood can be performed in two parts as described in the following. In the first part a horizontal array having the elements 64, 8, 1 shown in Fig. 4A, is multiplied by the pixel elements such that the central element of the array [8] is multiplied by the 3 pixels in the column of the pixel of interest, for example the pixel e of Fig. 1. For the array of Fig. 1 this results in intermediate sums of 73, 72 and 64. These sums are then multiplied by a vertical array of 4, 2 and 1, shown in Fig. 4B, and the results added together to obtain 292 + 144 + 64 = 500, which is the same result previously obtained. Simple arithmetic will verify that separating the convolution in this manner yields the same weightings as provided by the array of Fig. 2.

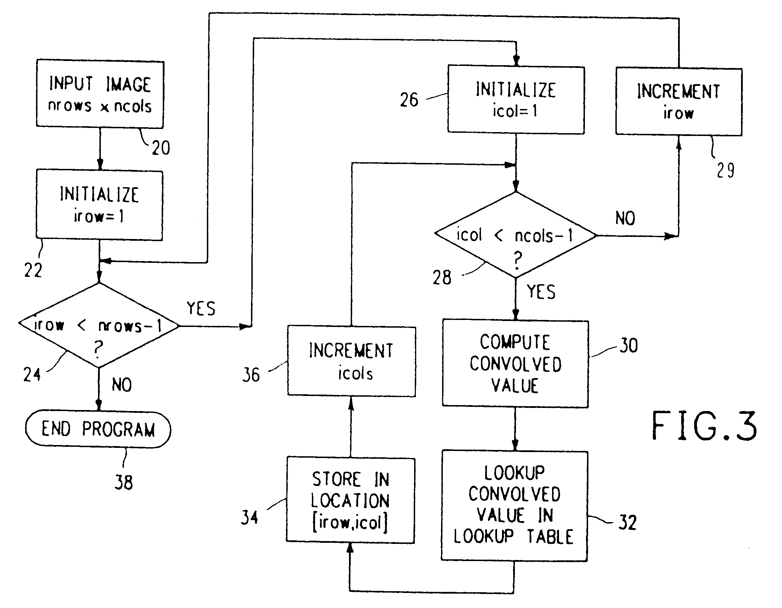

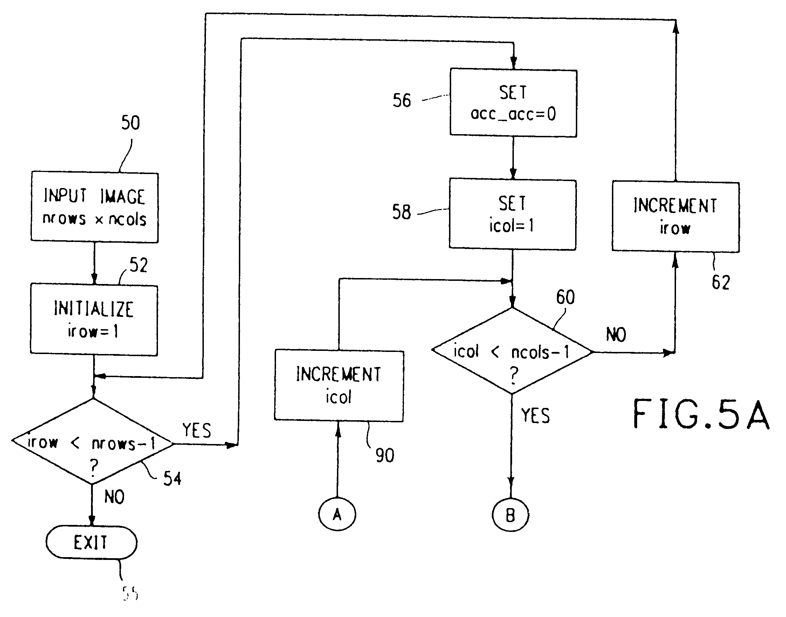

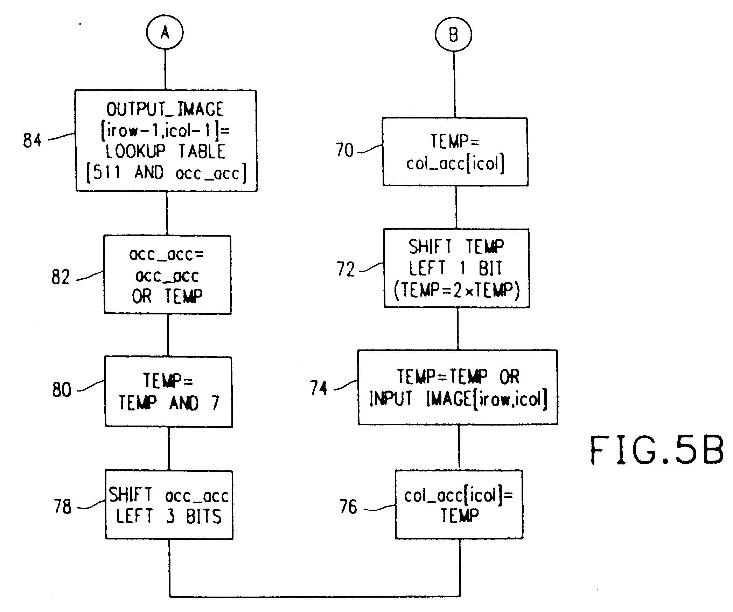

In the present invention a separated convolution is used in a recursive method to obtain a morphic transformation requiring only four memory accesses. Refer now to the flow charts of Figs. 5A and 5B.

At step 50 the input image is accessed from memory. For purposes of this discussion the input image is considered to be an array having dimensions of nrows by ncols and referred to as the variable input_image-[nrows,ncols]. It should be noted that the value of nrows need not equal the value of ncols.

At step 52 the row index, irow, is initialized to equal 1. Next, at step 54, an outer loop begins in which the value of irow is compared to nrows-1. If it is greater than nrows-1, the program terminates at step 80. This loop determines the row of the image element being processed. If not, execution continues by setting acc_acc equal to 0 and the column index, icol equal to 1 at steps 56 and 58 respectively. Thus the algorithm begins operation at position 1,1 of the input image.

At step 60 an inner loop begins to determine the column of the image element to be processed. Should icol be greater than or equal to ncols-1 the inner loop is exited and the row count is incremented by one at step 62. Otherwise program execution continues at step 70.

At step 70 a temporary or intermediate variable named TEMP is set equal to the value col_acc[icol]. The variable col_acc is a linear array, containing elements each representative of a selected number of bits in each column. The index icol selects which element of the array is being considered. Initially, the value of col_acc may be arbitrarily set since it represents transformations on a neighborhood that runs outside the boundary of the input image. This may be better understood by referring to Fig. 6 which shows a 4 X 3 region of the input image for purposes of discussion. The values a-j represent single bit binary values (e.g. 1 or 0). Using the example of Fig. 6, it will be assumed that processing has already been performed for the first three rows and columns and that we are now considering the lower right hand pixel having a value d. Thus col_acc will have previously been assigned a value of abcX and at step 70, TEMP will also be set equal abcX, where X is a "don't care" value.

The value of TEMP is left shifted 1 bit (or multiplied by 2) at step 72. This is equivalent to multiplying TEMP by two. It will be recalled that when the convolution has been separated into two parts, that one part consisted of multiplying the various image pixels by 1, 2, and 4. This is partially accomplished in this step. Since the algorithm is recursive, subsequent multiplication by two will accomplish multiplication by 4. In the present example TEMP now becomes equal to abc0. This new value of TEMP is then ORed with input_image(irow,icol) at step 74. Since both irow and icol are equal to 1, the value of the input image under consideration is d, and therefore TEMP equals abcd.

Next, col_acc[icol] is set equal to the new value of TEMP at step 76. Then at step 78 acc_acc is left shifted 3 bits. This is equivalent to multiplying acc_acc by 8, but is a much faster operation in most computers. It will also be recalled that when the convolution has been separated into two parts, that one part consisted of multiplying the various image pixels by 1, 8, and 64. This is partially accomplished in this step. Since the algorithm is recursive, subsequent multiplication by eight will accomplish multiplication by 64.

For purposes of explanation, the assumption that processing for the first three rows and columns has already been performed remains and that previous iterations of the algorithm had brought acc_acc to a value of XXXklmfgh. It now becomes equal to XXXklmfgh000.

In step 80 the value of TEMP is replaced with TEMP ANDed with 7d (0111b). Recall that TEMP was previously set equal to abcd and thus now equals 0bcd. Next, in step 82, the value of acc_acc is set equal to acc_acc ORed with TEMP. The OR process is equivalent to a binary addition, but in general is a faster operation. Thus, in accordance with the previous example, acc_acc takes on a new value of XXXklmfghbcd.

At step 84 the value of the output image for the location under consideration is set equal to a value held in a lookup table. The lookup table is a linear array having 512 elements, and is used to provide an output value in accordance with the index value. The index value is found by ANDing 511d (111111111b) with acc_acc which in the present example returns a value of klmfghbcd. In other words, ANDing by 511 strips off all but the low order 9 bits.

Execution continues at step 90 where the column index, icol, is incremented by 1. This process will continue until each column in a row is operated on, and then the row number is incremented. Execution continues until all pixel elements in all columns and rows have been operated on, after which the program terminates at step 80.

The principal advantage of this algorithm is that it minimizes the number of memory accesses: for each pixel in the input and output image, there are two reads and two writes (assuming acc_acc is kept in a register) versus nine reads and one write for the "naive" algorithm. In particular, each pixel in the input image is read exactly once, resulting in a faster morphic transformation since fewer accesses take less time.

Memory accesses in the present invention occur at steps 70, 74, 76 and 84. In all other operations, the data and variables will, such as TEMP and acc_acc, by design, remain in registers, such as an accumulator, which allows for very fast access.

Furthermore, the intermediate variable, col_acc can be stored in a fast memory, such as a cache. Accordingly, processing speed can be increased even further over that of the prior art algorithm.

A version of this algorithm written in the programming language C was compared with the "naive" version described with respect to Fig. 3, also written in C that accessed each pixel nine times. The proposed algorithm ran twice as fast, both on an IBM 3081 and on an IBM PC/XT.

The algorithm according to the present invention uses extra storage in addition to the input and output images (acc_acc, and the col_acc array). Note, however, that only the low order two bits of each entry of col_acc and the low order six bits of acc_acc are read-accessed in the inner loop. As such, the total number of bits of temporary storage required is approximately 2 X ncols. Hardware implementations of morphic transformations typically require two delay lines, each containing one row (i.e., 2 X ncols) binary pixels, which is essentially equivalent to the temporary storage used by the present invention.

The algorithm according to the present invention can be straightforwardly extended from a 3 x 3 neighborhood to an h-row by w-column neighborhood. The algorithm of Figs. 5A and 5B are modified as follows to achieve this extension. In step 78 acc_acc must be shifted by the value h in place of three, in step 80, TEMP should be ANDED with $2^h-1$ instead of 7, and step 84 acc_acc should be ANDed with $2^{hw}-1$ instead of 511.

In practice, this extension is limited by the fact that the lookup table must contain $2^{hw}$ entries. Thus, while h=w=4 is reasonable in terms of memory requirements ($2^{hw}=64K$), h=w=5 ($2^{hw}=32M$) may not be.

## Claims

1. A method for performing morphic transformations for elements in a two-dimensional array of data using a general purpose computer, said morphic transformations being performed on a h by w neighborhood, said method comprising the steps of:

   a) providing an two dimensional input array having m columns and n rows;

   b) initializing a row pointer ir to 1;

   c) testing whether ir is greater than n-1;

   d) terminating said method if ir is greater than n-1, and if not;

   e) setting a first accumulated value equal to 0;

   f) setting a column pointer ic to 1;

   g) testing whether ic is greater than m-1;

   h) incrementing ir by 1 if ic is greater than m-1, and then returning to step c, and if ic is not greater than m-1;

   i) providing a temporary variable, TEMP;

   j) providing a linear array col_acc[ic] having ic elements;

   k) setting TEMP equal to the element of col_acc indicated by ic;

   l) shifting the bits of TEMP left one position;

   m) ORing TEMP with the value of the pixel image being considered, and replacing TEMP with said ORed value;

   n) resetting col_acc[ic] to said replaced value of TEMP;

   o) providing a variable acc_acc, and shifting the bits of said acc_acc left h positions;

   p) replacing said replaced value of TEMP with a second replaced value equal to said replaced value of TEMP ANDed with $2^h - 1$ ;

   q) replacing said acc_acc with said value of acc_acc ORed with said second replaced value of TEMP;

   r) providing a lookup table having $2^{hw}$ elements, each of said elements being selected according to a Boolean function desired to be operated on said input image;

   s) using said replaced value of acc_acc ANDed with $2^{hw} - 1$ as an index into said lookup table to select an element thereof;

   t) providing a two-dimensional output array for storing output data processed from said two-dimensional input array;

   u) storing said selected lookup table element in said two-dimensional output array; and

   v) incrementing ic by 1 and returning to step g.

## Revendications

1. Procédé de réalisation de transformations dites morphiques des éléments d'un réseau de données bi-dimensionnel utilisant un ordinateur conventionnel, lesdites transformations morphiques étant réalisées selon un voisinage h par w, ledit procédé comprenant les étapes suivantes :

   a) établissement d'un réseau d'entrée bi-dimensionnel comportant m colonnes et n rangées ;

   b) initialisation d'un pointeur de rangée ir à 1 ;

   c) test de ir pour savoir si celui-ci est supérieur à n-1 ;

   d) arrêt dudit procédé si ir est supérieur à n-1, et si non ;

   e) mise d'une première valeur accumulée à zéro ;

   f) mise d'un pointeur de colonne ic à 1 ;

   g) test permettant de déterminer si ic est supérieur à m-1 ;

   h) augmentation de ir d'une unité si ic est supérieur à m-1, et retour à l'étape c, et si c n'est pas supérieur à m-1 ;

   i) création d'une variable temporaire, TEMP ;

   j) création d'un réseau linéaire col_acc[ic] comportant ic éléments ;

   k) mise de TEMP à la valeur correspondant aux éléments de col_acc indiqué par ic ;

   l) décalage des bits de TEMP d'une position à gauche ;

m) réalisation de la fonction logique OU entre TEMP et la valeur du pixel image considéré, et remplacement de TEMP par ladite valeur obtenue par la fonction logique OU ;

n) mise de col_acc[ic] à la nouvelle valeur de TEMP ;

o) création d'une variable acc_acc, et décalage des bits de acc_acc de h positions à gauche ;

p) remplacement de la nouvelle valeur de TEMP par une seconde valeur de remplacement égale à celle obtenue en réalisant la fonction logique ET entre la valeur de TEMP et $2^h$ -1 ;

q) remplacement de ladite valeur acc_acc par la valeur obtenue en réalisant la fonction logique OU entre acc_acc et la seconde valeur de remplacement de TEMP ;

r) établissement d'une table de consultation ayant $2^{hw}$ éléments, chacun desdits éléments étant choisi selon une fonction Booléenne désirée à réaliser sur ladite image d'entrée ;

s) utilisation de ladite valeur obtenue en réalisant la fonction logique ET entre acc_acc et $2^{hw}$ - 1 comme index de ladite table de consultation pour y choisir un élément ;

t) constitution d'un réseau de sortie bi-dimensionnel destiné à stocker des données de sortie traitées à partir dudit réseau d'entrée bi-dimensionnel ;

u) stockage dudit élément choisi dans la table de consultation dans ledit réseau de sortie bi-dimensionnel ; et

v) augmentation de ic d'une unité et retour à l'étape g.

## Patentansprüche

1. Ein Verfahren zur Ausführung von morphischen Transformationen für Elemente in einer zweidimensionalen Datenmatrix unter Verwendung eines Universalrechners, wobei die morphischen Transformationen an einer h-mal-w-Nachbarschaft ausgeführt werden und das Verfahren die folgenden Schritte umfaßt:

a) Vorsehen einer zweidimensionalen Eingangsmatrix mit m Spalten und n Zeilen;

b) Initialisieren eines Zeilenzeigers ir auf 1;

c) Prüfen, ob ir größer n-1 ist;

d) Beenden des Verfahrens, wenn ir größer n-1 ist, und wenn nicht;

e) Setzen eines ersten akkumulierten Wertes gleich 0;

f) Setzen eines Spaltenzeigers ic auf 1;

g) Prüfen, ob ic größer m-1 ist;

h) Erhöhen von ir um 1, wenn ic größer m-1 ist und anschließend Zurückkehren zum Schritt c), und wenn ic nicht größer m-1 ist;

i) Vorsehen einer temporären Variablen, TEMP;

j) Vorsehen einer linearen Matrix col_acc[ic] mit ic Elementen;

k) Setzen von TEMP gleich dem Element von col_acc, das von ic angezeigt wird;

l) Verschieben der Bits von TEMP um eine Stelle nach links;

m) Verknüpfen von TEMP durch logisches ODER mit dem Wert des betrachteten Pixelbildes und Ersetzen von TEMP durch den ODER-verknüpften Wert;

n) Zurücksetzen von col_acc[ic] auf den ersetzten Wert von TEMP;

o) Vorsehen einer Variablen acc_acc und Verschieben der Bits von acc_acc um h Stellen nach links;

p) Ersetzen des ersetzen Wertes von TEMP durch einen zweiten ersetzten Wert, der gleich dem ersetzten Wert von TEMP ist, die durch logisches UND mit $2^h$ - 1 verbunden ist;

q) Ersetzen von acc_acc durch den Wert von acc_acc, der durch logisches ODER mit dem zweiten ersetzten Wert von TEMP verknüpft ist;

r) Vorsehen einer Zuordnungstabelle mit $2^{hw}$ Elementen, wobei jedes der Elemente entsprechend einer Boolschen Funktion ausgewählt wird, mit der Operationen an dem Eingangsbild ausgeführt werden sollen;

s) Verwenden des ersetzten Wertes von acc_acc, der durch logisches UND mit $2^{hw}$ - 1 verknüpft ist, als einen Index in die Zuordnungstabelle, um ein Element daraus auszuwählen;

t) Vorsehen einer zweidimensionalen Ausgangsmatrix, um Ausgabedaten zu speichern, die aus der zweidimensionalen Eingangsmatrix verarbeitet wurden;

u) Speichern des ausgewählten Elements der Zuordnungstabelle in der zweidimensionalen Ausgangsmatrix; und

v) Erhöhen von ic um 1 und Zurückkehren zum Schritt g).

FIG.1

| | 1 | 1 | 1 | 0 |
|---|---|---|---|---|
| 0 | $^a1$ | $^b1$ | $^c1$ | 0 |
| 0 | $^d1$ | $^e1$ | $^f0$ | 1 |
| 1 | $^g1$ | $^h0$ | $^i0$ | 0 |
| 1 | 0 | 1 | 0 | 1 |

←—10

FIG.2

| $2^8$ | $2^5$ | $2^2$ |
|---|---|---|
| $2^7$ | $2^4$ | $2^1$ |
| $2^6$ | $2^3$ | $2^0$ |

←—12

FIG.4A

| 64 | 8 | 1 |
|---|---|---|

FIG.4B

| 4 |
|---|
| 2 |
| 1 |

FIG.6

| | j | e | a |
|---|---|---|---|
| | k | f | b |
| | l | g | c |
| | m | h | d |

FIG.3

INPUT IMAGE
nrows × ncols
20

INITIALIZE
irow=1
22

irow < nrows-1
?
24

YES

NO

END PROGRAM
38

26  INITIALIZE
icol=1

INCREMENT
irow
29

icol < ncols-1
?
28

NO

YES

INCREMENT
icols
36

COMPUTE
CONVOLVED
VALUE
30

STORE IN
LOCATION
[irow,icol]
34

LOOKUP
CONVOLVED
VALUE IN
LOOKUP TABLE
32

EP 0 265 627 B1

8

FIG.5A

EP 0 265 627 B1

(A)

(B)

84 — OUTPUT_IMAGE
[irow−1,icol−1]=
LOOKUP TABLE
[511 AND acc_acc]

70 — TEMP=
col_acc[icol]

82 — acc_acc=
acc_acc
OR TEMP

72 — SHIFT TEMP
LEFT 1 BIT
(TEMP=2×TEMP)

80 — TEMP=
TEMP AND 7

74 — TEMP=TEMP OR
INPUT IMAGE[irow,icol]

78 — SHIFT acc_acc
LEFT 3 BITS

76 — col_acc[icol]=
TEMP

FIG.5B